# EUROPEAN PATENT SPECIFICATION

(11) **EP 2 514 690 B1**
(45) Date of publication and mention of the grant of the patent: **25.12.2013**
(21) Application number: 11163027.3
(22) Date of filing: 19.04.2011
(51) Int. Cl.: B65G 1/137, B66F 9/075, G05D 1/02

(54) **Warehouse guiding system for industrial trucks**
Lagerführungssystem für Flurförderfahrzeuge
Système de guidage d'entrepôt pour véhicules industriels

(43) Date of publication of application: 24.10.2012
(73) Proprietor: Deutsche Post AG, 53113 Bonn (DE)
(72) Inventor: Cavalheiro Lopes, José Manuel, 2615-044 Alverca do Ribatejo (PT)
(74) Representative: Jostarndt, Hans-Dieter

(56) References cited:
- EP-A1- 0 489 176
- JP-A- 2 144 667
- JP-A- 7 285 622
- JP-A- 2006 240 772

## Description

### Field of the invention

The invention relates to a warehouse guiding system to support fast delivery of objects from at least one of the storage racks to at least one loading dock of the warehouse and to a method to operate such system.

### Background of the invention

The business success of a logistic chain depends on the time required to transport the right object from the sender to the recipient. Therefore all processes contributing to the logistic chain should be made as effective as possible. In case of transportation processes of multiple objects from a warehouse to a receiver or another warehouse or logistic hub, a key factor for an efficient logistic process is the fast collection of the objects specified in an order list from the storage locations and delivering this collection of objects to a loading dock for further transportation via transport vehicles. This also includes the collection of the correct objects, since any object collected and transported within a transport vehicle, which was not intended to be transported will require additional handling and time to correct this collection failure. Therefore all transportation processes within a warehouse, especially the collection of objects from a warehouse to provide this collection at a loading dock for further transportation, should be executed fast and correct.

Document DE 10 2007 029 887 A1 discloses a warehouse system enabling an order picking truck to recognize the position of the order picking truck within a warehouse. Therefore barcode labels are attached to the storage racks and the order picking trucks are equipped with barcode readers to read the barcode labels on the storage racks. To be able to read the barcode label during driving the order picking trucks, the barcode readers are arranged on both sides of the order picking truck and are aligned vertically to the driving direction of the order picking truck. To be able to read the barcode labels, the order picking truck, especially the barcode reader, have to be moved along the storage rack, where the position of the barcode readers and the position of the barcode labels have to be aligned carefully in order to be able to read-out the barcode. In addition, a reliable recognition of the coded information of the barcode label requires a scanning of the barcode (with the barcode reader) from short distance. In case of trucks having a distance to the storage racks exceeding a certain maximum distance are not able to read-out the barcode label. In case of misaligned barcode readers, the order picking truck is not able to determine its position within the warehouse and fails to find the objects to be picked-up. There could be different reasons for misaligned barcode reader, mechanical fixations becoming lose during truck operation due to mechanical impacts, e.g. collisions or getting lose due to vibrations during truck operation. Furthermore barcode readers arranged at the sides of the order picking truck with scanning direction vertical to the moving direction prevent any position recognition in case of trucks approaching a rack in a vertical direction. Another disadvantage is the missing visual check of the position of the order picking truck by the driver. The driver is not able to recognize the current position of his truck visually, since the position is coded as a barcode. Therefore to orientate oneself within the warehouse the driver requires a computer-based navigation of the order picking truck. Furthermore, trucks with do not comprise such barcode readers are not able to find the correct position to pickup the objects from the racks.

JP 2006/240772 A discloses a sorting system according to the preamble of claim 1, wherein racks are provided with displays for displaying sorting information of goods on the display. A worker is able to perform assorting work based on the displayed sorting information. At an entrance gate of a working block an ID reader of the entrance gate reads the ID tag of the cart. In the ID tag identification information of the cart is written in. The identification code is sent to a controller. The controller verifies if there is any sorting information which is assigned to that identification code. In the case there is sorting information assigned to that identification code, the controller classifies number indicators arranged at shelves of the working block applicable to the sorting information. The worker performs assorting work in accordance to the classification number currently displayed on the number indicator. The worker finishes the assorting work of a product by switching of the display/indicator by pushing a complete button of that indicator.

### Summary of the invention

It is an object of the invention to provide a warehouse guiding system to support fast delivery of objects from at least one of the storage racks to at least one loading dock of the warehouse, which does not require critical alignment procedures for the involved industrial trucks and can be applied independently to the type of racks and the type of industrial trucks.

This object is solved by a warehouse guiding system according to claim 1.

The warehouse guiding system according to the present invention supports fast delivery of objects from at least one of the storage racks to at least one loading dock of the warehouse. The industrial trucks are visually guided (lightened-up guiding display) to the objects to be collected in order to save time for the collection process. The visually guidance can be applied to the drivers of any industrial truck without requiring additional navigation equipment. The industrial trucks as used within the warehouse system according to the present invention do not require critical alignment procedures to be able to be operated within such system. The visual guiding system can be seen and understood easily by the driver without requiring additional equipment. The trucks only have to be equipped with a machine-readable identification tag such as a common RFID-tag. The position of the identification tags can be at any suitable position of the industrial trucks and does not require a certain special alignment of the identification tags. The identification tags can be applied to any type of industrial truck regardless of the intended driving direction, driving orientation or pick-up direction (e.g. direction of the pick-up forks). The guiding means are able to be attached to any type of storage racks at any position suitable to recognize the identification tag of the industrial truck. In case of RFID-tag as the identification tags, the distance between first guiding means and the identification tag can be several meters for secure read-out of the identification tag providing enough space to select an appropriate location for the identification tags and the first guiding means to be able to guide the identified industrial trucks. The RFID tag might be an active or passive transponder suitable to send-out the identification code continuously (active mode of the transponder) or in response of a received identification request received from the first and/or second identification sensors (passive mode of the transponder). Active transponders require a power supply while passive transponders can be operated without an internal power supply. Such transponders are available as thin sheets with an adhesive surface to be mounted at any suitable position.

An industrial truck according to the present invention is a wheeled vehicle commonly used in a plant or distribution center, in a loading dock area and in some cases also in the yard or on construction sites, to pick up, transport and deposit single loads, e.g. from storage racks towards transport vehicles. Industrial trucks may be powered manually, electrically, by gasoline or by propane. One typical example of an industrial truck is a forklift truck also known as a "forklift," "lift truck" or "counterbalanced lift truck". A forklift truck is a material handling vehicle designed to move loads by means of steel fingers or forks inserted under a load. Other examples of industrial trucks are pallet jacks, walkie stackers, pallet trucks, platform trucks, straddle trucks, reach trucks, Turret trucks, order picker or side loader.

The term "storage rack" denotes any arrangement of shelves suitable to intermediately store objects for further subsequent transportations. Examples of storage racks are high-racks, roll-trough shelves or pallet racks.

The term "warehouse" denotes any area, where objects are stored for further transportation. The warehouse might be a logistic hub or a logistic terminal to further distribute objects to other hubs, logistic terminals, warehouses or to the recipients. Objects according to the present invention might be any type of goods suitable to be stored in a storage rack. The objects might be arranged separately on shelves of the storage racks or might be located as multiple objects on top of a carrying pallet.

The warehouse computer system provides delivery orders to the industrial trucks. Therefore the warehouse computer system is connected to the industrial truck with a wireless technology. The connection could be established by a mobile communication system connected to the warehouse computer system and sending out the delivery orders created by the warehouse computer system to the drivers of the industrial truck carrying headphones suitable to receive the delivery orders. Alternatively the delivery orders might be transmitted to a display device arranged at the industrial truck, e.g. an order display. Here the delivery order might be transmitted via a mobile communication system or via a wireless data system like a WLAN network within the warehouse. The warehouse computer system might be any suitable computer system with suitable components to provide data connections to the industrial trucks and the first (and second) guiding means). The data connection might be wireless, via a data cable (where applicable) or a combination of wired and wireless connections. The warehouse computer system may comprise a central computer unit with a database comprising the stored objects, corresponding barcodes attached to the objects and the identification codes of the industrial trucks. The warehouse computer system might be arranged in one embodiment as a server-client system, where the clients may be subunits of warehouses, e.g. different departments. In another embodiment the warehouse computer system might be connected to different warehouses. Also the warehouse guiding system may comprise more than one warehouse.

The delivery orders comprise at least one object to be collected, e.g. removed from the storage rack, and transported to the loading dock by an industrial truck. In case of multiple objects within the delivery order, the objects might be transmitted object by object with the subsequent object transmitted after having collected the previous object or the objects might be transmitted as a list of objects to be collected. The latter possibility is advantageous in case of present display devices displaying the list of objects to be collected, e.g. with an order display. Each delivery order is assigned to a particular truck therefore different trucks will execute different delivery orders or lists of delivery orders. Collecting objects denotes the removal of objects specified in the delivery orders from the corresponding storage rack. Each object is stored at a specific storage location within one storage rack of the warehouse. To support the collection, the warehouse computer system controls multiple first guiding means in accordance to the provided delivery orders to indicate the location of the objects to be collected to the driver of the industrial truck assigned to this particular delivery order. As an example one particular first guiding means may light-up when a first industrial truck approaches the sector of the storage rack where the first guiding means is attached to, wherein the delivery order of the first industrial truck specifies an object to be collected from the third shelve of this storage sector. The same first guiding means may light-up again when a second industrial truck approaches the same sector of the storage rack where the first guiding means is attached to, wherein the delivery order of the second industrial truck specifies another object to be collected from the second shelve of this storage sector. The same procedure will take place for other industrial trucks at other location within the warehouse trying to collect other objects according to other delivery orders assigned to the other industrial trucks.

In an embodiment the first light-up guiding display also displays the characteristic identification code provided by the identification tag of the identified truck, preferably also the storage level of the storage rack where the particular object is stored. The displayed identification code, e.g. the number of the industrial truck, prevents any misunderstanding of the storage location in case of two industrial trucks being present close to the location of the light-up first guiding means. The driver of the intended industrial truck will recognize his truck number and will stop at the indicated position, wherein the other driver of the other industrial truck will recognize from the truck number, that the lighted-up first indication means will not address him. The width and height of the first guiding display should be in the order of at least some centimeters in order to be readable from a distance of a few meters.

According to the invention, the first guiding means comprises a storage unit, where at least the identification codes of the industrial trucks are stored. The stored identification codes enable a reduction of the required communication between first guiding means and the warehouse computer system during identification of the industrial trucks. In large warehouses, a lot of trucks are driving along the storage racks. Therefore the first guiding means have to identify industrial trucks more or less continuously. Therefore the identification codes are advantageously permanently present within the first guiding means. However, the stored data might be updated by the warehouse computer system at any time. Preferably, also the assigned delivery orders and the particular object to be collected in this particular storage rack sector

In another embodiment the storage racks within the warehouse are separated from each other by corridors suitable for driving the industrial trucks through the corridors and each storage rack comprises at least one second guiding means connected to the warehouse computer system and arranged at the beginning of each corridor, where the second guiding means comprises a second identification sensor to identify the industrial trucks approaching the storage racks from the loading dock via the corresponding identification tags, and a second guiding display guiding the identified truck into the right corridor according to the assigned delivery order suitable to collect the objects of the assigned delivery order. Here the trucks are guided to enter the right corridor. Along the corridor, the first guiding means will provide the further guiding to find the right location within this particular storage rack. Large warehouses may comprise a large number of storage racks, mostly shaped equally. In such warehouse it is difficult for the drivers to find the right storage rack fast. The second guiding means will provide a solution for the drivers to be able to enter the right corridor at the first attempt. In large warehouse the second guiding means will reduce the required time to collect objects significantly. The term "beginning of the storage racks" denotes the side of the storage racks, which faces towards the loading docks or the driving direction from the loading docks in order to enter the storage rack area.

In another embodiment the second guiding display displays the characteristic identification code provided by the identification tag of the identified truck in order to guide the industrial truck into the right corridor. The displayed identification code, e.g. the number of the industrial truck, prevents any misunderstanding of the storage location in case of two industrial trucks being present close to the corridor of the light-up second guiding means. The driver of the intended industrial truck will recognize his truck number and will enter the indicated corridor, wherein the other driver of the other industrial truck will recognize from the truck number, that the lighted-up second indication means will not address him. The width and height of the second guiding display should be in the order of at least some tens of centimeters in order to be readable from a distance of several meters.

In another embodiment the industrial truck comprises an order display connected to the warehouse computer system displaying the delivery orders assigned to the industrial truck provided by the warehouse computer system. The order display can be mounted to any industrial truck at any suitable position, e.g. in the neighborhood of the steering wheel or the front screen or front side of the driver cabin. The order display might be any suitable display, e.g. a 7", 11" or 14" display, large enough to display the delivery orders, but small enough not to hamper the driving of the industrial truck. The order display may comprise a storage unit and a processor unit in order to receive, store and eventually process assigned delivery orders received from the warehouse computer system. The order display comprises a receiving unit in order to at least receive the assigned delivery orders provided by the warehouse computer system.

In another embodiment the assigned delivery order comprises one or more objects to be collected as listed in a sequence and that the warehouse computer system is arranged to provide the list of objects in the sequence enabling the industrial truck to collect the objects via the shortest distance to be driven when executing the assigned delivery order along the listed sequence. To be able to optimize the sequence of objects to be collected with respect to the distance to-be-driven by the industrial truck during executing the collection according to the delivery order the warehouse computer system comprises a navigation unit calculating the most effective rout (shortest distance) for the industrial trucks to collect the objects according to the provided delivery order. The navigation unit comprises a floor plan of the warehouse and has access to a database of the warehouse computer system comprising the locations of each of the objects. The navigation unit may execute a common navigation program as a route optimizing application providing the optimized sequence of objects for this particular delivery order.

In another embodiment the industrial truck comprises a barcode reader connected to the order display suitably arranged to read-out a barcode label attached to a front side of the object facing towards the collecting industrial truck when removing the object from the storage rack. The barcode reader enables to check the objects removed from the storage racks, whether these objects are in the right place and coincidence to the objects to be collected according to the delivery order. With the barcode reader, failures according to objects stored at the wrong locations or removing objects from the wrong location within the storage rack can be detected immediately. Therefore collection failures can be corrected immediately avoiding transportation of wrong objects with transportation vehicle or avoiding additional handling effort, if wrong objects have to be taken out of a collection of objects at the loading docks. This kind of failure detection within the warehouse will result in an increased customer satisfaction and more effective transportation processes. The barcode reader might be a laser scanner suitable to read out barcodes. The barcode label might be attached to the objects as an adhesive label comprising the barcode. The barcode label might be attached to the objects after placing the objects into the storages racks for the first time. The barcode itself may apply any common barcode scheme. In a preferred embodiment the assigned delivery order comprises the barcodes attached to the objects and the order display comprises comparing means to compare the read-out barcode of the object to the barcode present in the delivery order and is arranged to provide a warning message in case of the read-out barcode deviates from the barcode in the assigned delivery order or in case of no barcode is read-out. The warning message might be displayed as text message on the order display or might be displayed differently. The warning message may additionally comprise and audible signal, e.g. a warning tone.

In another embodiment the order display comprises a confirmation button suitable to quit the warning message to indicate to the warehouse computer system, that the removed object is the intended object listed in the delivery order. In case of wrongly labeled objects, the driver of the industrial truck has the opportunity to recognize the object as the right object. Then the driver can quit the warning signal resulting in recording the right object being collected by the warehouse computer system.

The invention further relates to a method to operate a warehouse guiding system for industrial trucks according to claim 10.

In an embodiment the method further comprises the step of displaying the characteristic identification code provided by the identification tag of the identified truck, preferably also the storage level of the storage rack where the particular object is stored.

In another embodiment the method further comprises the following steps of
- approaching an arrangement of storage racks from the loading dock where the storage racks are separated from each other by corridors suitable for driving the industrial trucks through the corridors and each storage rack comprises at least one second guiding means connected to the warehouse computer system and arranged at the beginning of each corridor;
- identifying the industrial trucks approaching the storage racks from the loading dock via the corresponding identification tags with a second identification sensor of the second guiding means; and
- guiding the identified truck into the right corridor suitable to collect the objects of the delivery order assigned to the identified truck by displaying the characteristic identification code provided by the identification tag of the identified truck.

In another embodiment the method further comprises the step of displaying the delivery orders assigned to the industrial truck provided by the warehouse computer system with an order display arranged in the industrial trucks and connected to the warehouse computer system, preferably to collect objects are listed in a sequence enabling the industrial truck to collect the objects via the shortest distance to be driven when executing the assigned delivery order along the listed sequence.

In another embodiment the method further comprises the step of reading-out a barcode label attached to a front side of the object facing towards the collecting industrial truck when removing the object from the storage rack by a barcode reader suitable arranged in the industrial truck and connected to the order display; preferably the order display further compares the read-out barcode of the object with the barcode present in the delivery order with comparing means and provides a warning message in case of the read-out barcode deviates from the barcode in the assigned delivery order or in case of no barcode is read-out; more preferably notifying the warehouse computer system about the removed object after read-out of the barcode. The warehouse computer system will use the notification in order to update the list of objects present within the storage racks for managing the warehouse.

### Brief description of the drawings

These and other aspects of the invention will be apparent from and elucidated with reference to the embodiments described hereinafter.
- Fig.1:: shows an industrial truck approaching a storage rack according to the present invention.
- Fig.2:: shows a warehouse according to the present invention with industrial trucks entering the storage rack area guided by the second guiding means.
- Fig.3:: shows an embodiment of an industrial truck according to the present invention reading-out a barcode label attached to the object.
- Fig.4:: shows an embodiment of the data connections between warehouse computer system, industrial trucks and first and second guiding means.
- Fig.5:: shows an embodiment of the method to operate the warehouse guiding system according to the present invention.

### Detailed description of embodiments

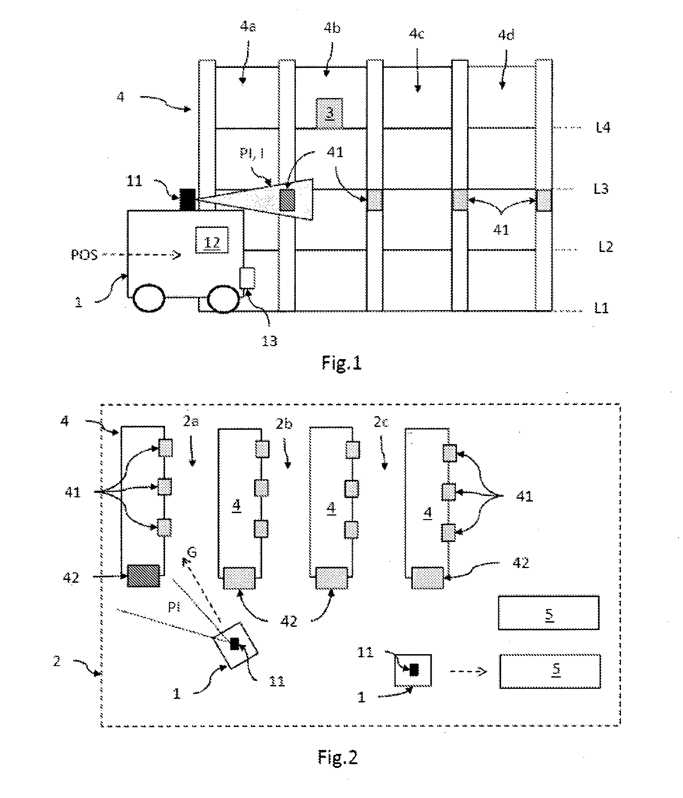

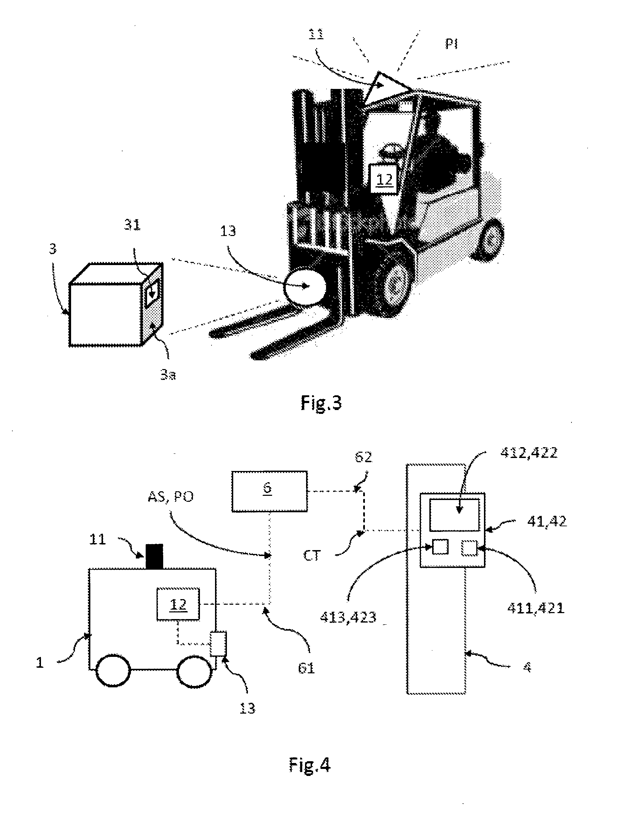

Figure 1 shows an industrial truck 1 approaching a storage rack 4 according to the present invention. The industrial trucks 1 comprise a wireless machine-readable identification tag 11 as an active RFID transponder continuously providing PI an identification code, which is characteristic for the corresponding industrial truck 1. The storage rack 4 is equipped with first guiding means 41 connected to the warehouse computer system 6 arranged at each storage sector 4a, 4b, 4c, 4d of the storage rack 4 in order to receive the assigned delivery orders from the warehouse computer system 6 together with the characteristic identification codes of the corresponding industrial trucks 1. Each of the first guiding means 41 comprise a first identification sensor (411, see figure 4) to identify the industrial trucks 1 being in the proximity of the first guiding means 41 via the received corresponding identification code from the identification tags 11. The first guiding means 41 additionally comprise a first guiding display (412, see figure 4). The shown industrial truck 1 has an assigned order to collect object 3 in storage rack sector 4b. Therefore the first guiding means 41 at the particular storage sector 4b lights-up (indicated by the dark gray area) when this industrial truck 1 approaching this particular storage section 4b. The object is stored in the fourth level L4 of the storage rack 4 of storage rack section 4b. In order to support the industrial truck to arrive (POS) at the right position to collect the object 3 the first light-up guiding display also displays the characteristic identification code provided by the identification tag 11 of the identified truck and the storage level L4 where the particular object 3 is stored. The shown industrial truck 1 comprises a barcode reader 13 and an order display 12 to connected to the warehouse computer system 6 displaying the delivery orders assigned to the industrial truck 1 provided by the warehouse computer system 6.

Fig.2 shows a warehouse 2 (indicated as dashed area) according to the present invention with industrial trucks 1 entering the storage rack area guided by the second guiding means 42. The storage racks 4 within the warehouse 2 are separated from each other by corridors 2a, 2b, 2c suitable for driving the industrial trucks 1 through the corridors 2a, 2b, and 2c. Each of the storage racks 4 comprises at least one second guiding means 42 connected to the warehouse computer system 6 in order to receive the assigned delivery orders from the warehouse computer system 6. The second guiding means 42 are arranged at the beginning of each corridor 2a, 2b, 2c, where the "beginning" denotes the side of the storage racks 4 facing towards the driving direction of industrial trucks 1 entering the storage rack area. The second guiding means 42 comprises a second identification sensor (421, see figure 4) to identify the industrial trucks 1 approaching the storage racks 4 from the loading dock 5 via the corresponding identification tags 11, and a second guiding display (422, see figure 4) to guide G the identified truck 1 into the right corridor 2a according to the assigned delivery order suitable to collect the objects 3 of the assigned delivery order. After having entered the right corridor 2a, the industrial truck 1 will be further guided by the first guiding means 41 present at each storage rack sector.

Fig.3 shows an embodiment of a forklift as the industrial truck 1 according to the present invention reading-out a barcode label 31 attached to the object 3. In addition to the order display 12 the industrial truck 1 comprises a barcode reader 13 connected to the order display 12 and suitably arranged to read-out a barcode label 31 attached to a front side 3a of the object 3 facing towards the collecting industrial truck 1 when removing the object 3 from the storage rack 4. In order to read-out the barcode label reliable, the barcode reader 13 is preferably arranged in a height of 50 cm above the carrying surface of the industrial truck, e-.g- the forks of a forklift as the industrial truck.

Correspondingly the barcode label 31 should be attached at a height of 50 cm at the front side 3a of the object 3 facing towards the collecting forklift 1. In another embodiment, a camera is arranged close to the barcode reader 13 in order to enable the driver of the industrial truck 1 to adjust the barcode reader 13 in front of the barcode label 31 by the picture recorder by the camera, where the camera pictures are displayed on the order display 12. Furthermore the barcode reader 13 might be activated by the driver when the fork of the industrial truck 1 is already inserted into the storage rack of a suitable distance in order to remove the object 3. Then the barcode reader 13 is at a suitable distance to the barcode label 31 to read-out the barcode label 31. To proof whether the read-out object is the intended object present in the delivery order, the assigned delivery order comprises the barcodes attached to the objects 3 and the order display 12 comprises comparing means to compare the read-out barcode 31 of the object 3 to the barcode present in the order. In case of no coincidence of both barcodes the order display 12 provides a warning message to the driver of the forklift 1. The order display 12 further comprises a confirmation button suitable to quit the warning message to indicate to the warehouse computer system 6, that the removed object 3 is the intended object 3 listed in the delivery order. In case of matching barcodes the warehouse computer system 6 will be notified from the order display 12 about the removed object 3 in order to update the stock inventory.

Fig.4 shows an embodiment of the data connections 61, 62 between warehouse computer system 6, the industrial truck 1 and first and second guiding means 41, 42. Furthermore the components of the first and second guiding means are shown in more details. The first and second guiding means 41, 42 comprise first and second identification sensors 411, 421 to identify the industrial trucks 1 in response to the provided PI characteristic identification codes, first and second guiding displays 412, 422 to light-up in response to an approaching identified industrial truck with an appropriate assigned delivery order and subsequently to display at least the identification code of the corresponding industrial truck 1. Furthermore the first and second guiding means 41, 42 comprise first and second storage units 413, 423 to at least store the identification codes of the industrial trucks 1 locally in order to avoid otherwise required data communication to the warehouse computer system 6 for every approaching industrial truck. Preferably also the assigned delivery orders are stored within the storage units 413, 423 and only updated by the warehouse computer system 6 in case of changes of the delivery orders. Changes might be caused by assigning the delivery order to another industrial truck 1 or be changing the list of objects within a certain delivery order. The data connection 61 between the warehouse computer system 6 and the industrial truck 1 is a wireless data connection, e.g. via a mobile communication network or via WLAN. The other data connection 62 between the warehouse computer system 6 and the first and second guiding means 41, 42 might be established via a data cable and/or via the previously mentioned wireless connection.

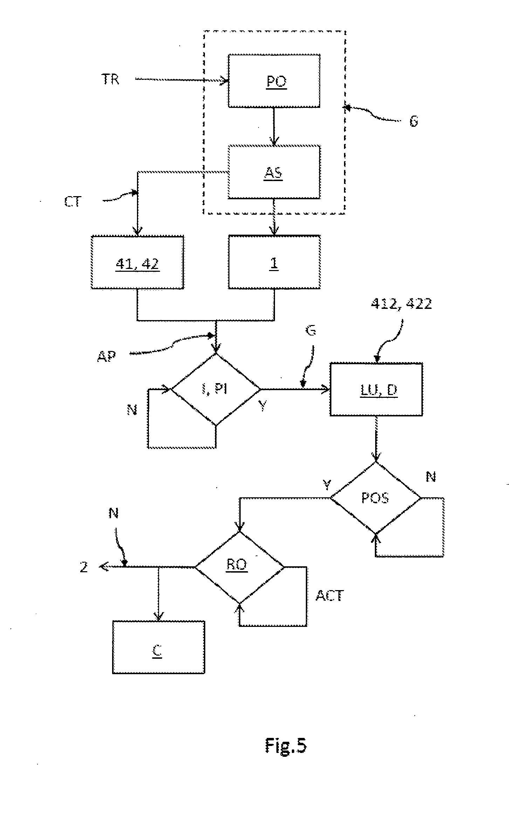

Fig.5 shows an embodiment of the method to operate the warehouse guiding system according to the present invention. In response to a transportation request TR, the warehouse computer system 6 provides PO a corresponding delivery order and assigns AS this delivery order to a particular industrial truck 1. Simultaneously, the warehouse computer system 6 sends this assigned delivery order to the first and second guiding means 41, 42 to enable this guiding means to guide the industrial truck 1 accordingly. When the industrial truck 1 approaches a first and/or a second guiding means 41, 42, the first and second guiding means identify I the industrial truck 1 via the continuously provided PI identification code. In case of passive transponders as tags 11, the first and second guiding means 41, 42 have to send-out identification requests, where the passive tags only response to. In case of no industrial trucks 1 present in the proximity of the first or second identification sensors 411, 412, these sensors keep trying to receive an identification code from an industrial truck 1 (indicated by the loop "N"). If an industrial truck 1 is identified I, the corresponding first and/or second guiding displays 412, 422 guide the identified industrial truck 1 to the right position POS in front of the storage rack section 4b, where the object 3 to be collected is stored. After reaching the right position POS, the barcode reader 13 is already ready to read-out RO the barcode label 31, or the barcode reader might be activated ACT. This activation might be performed by switching on the barcode reader manually. Subsequently the barcode reader 13 reads-out RO the barcode label 31 attached to the object 3 and in response of a coincidence between read-out barcode and the expected barcode as present within the delivery order, the order display sends a corresponding notification N to the warehouse computer system 6 to update the stock inventory.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### LIST OF NUMERALS

- 1: industrial truck
- 11: identification tag
- 12: order display
- 13: barcode reader
- 2: warehouse
- 2a -2c: corridors between the storage racks
- 3: stored objects
- 3a: front side of the object facing towards the industrial truck
- 31: barcode label attached to the object
- 4: storage rack
- 4a -4d: storage rack sectors
- 41: first guiding means
- 411: first identification sensor
- 412: first guiding display
- 413: storage unit of first guiding means
- 42: second guiding means
- 421: second identification sensor
- 422: second guiding display
- 423: storage unit of second guiding means
- 5: loading dock
- 6: warehouse computer system
- 61: data connection to the industrial trucks
- 62: data connection to the first / second guiding means
- AS: assigning the delivery orders
- ACT: activating the barcode reader
- C: collecting the objects from the storage racks
- CT: controlling the first / second guiding means in accordance to the assigned delivery orders
- D: displaying the characteristic identification code on the first / second guiding displays
- I: identifying the industrial truck via the identification tag
- L1 -L4: storage levels of the storage rack
- N: notifying the warehouse computer system about the removed objects
- PI: providing the characteristic identification code
- PO: providing the delivery orders
- POS: positioning the industrial truck in front of the storage rack in accordance to the first guiding means
- RO: reading-out the barcode attached to the object
- TR: transportation request

## Claims

1. A warehouse guiding system arranged in
a warehouse (2) comprising multiple objects (3) stored in at least one storage rack (4) in order to support fast delivery of objects (3) from at least one of the storage racks (4) to at least one loading dock (5) of the warehouse (2) by industrial trucks (1),
the system comprising :
- industrial trucks (1),
- at least multiple first guiding means (41),
- a warehouse computer system (6) providing delivery orders to the industrial trucks (1)-and assigning particular delivery orders to particular trucks (1) to collect the objects (3) specified in the delivery orders from the corresponding storage rack (4) and to control at least the multiple first guiding means (41) in accordance to the assigned delivery orders, wherein
the industrial trucks (1) comprise a wireless machine-readable identification tag (11) providing a characteristic identification code for the corresponding industrial truck (1), wherein
the storage rack (4) comprises the first guiding means (41) connected to the warehouse computer system (6) with at least one first guiding means (41) arranged at each storage sector (4a, 4b, 4c, 4d) of the storage rack (4), and a first guiding display (412), wherein the first guiding means (41) at the particular storage sector (4b) storing the particular object (3) specified in the particular delivery order is arranged to light-up the first guiding display (412) **characterized in that**
the first guiding means (41) comprises a storage unit (413), where the identification codes of the industrial trucks (1) are stored, and
the first guiding means (41) each comprise a first identification sensor (411) to identify the industrial trucks (1) being in the proximity of the first guiding means via the corresponding identification tags (11) and the first guiding means (41) is arranged to light up the first guiding display (412) when the identified industrial truck (1) approaching this particular storage section (4b) corresponds to the industrial truck (1) assigned to the particular delivery order comprising the particular object (3).

2. The warehouse guiding system according to claim 1,
**characterized in that,**
the first light-up guiding display (412) also displays the characteristic identification code provided by the identification tag (11) of the identified truck (1), preferably also the storage level (L1, L2, L3, L4) of the storage rack (4) where the particular object (3) is stored.

3. The warehouse guiding system according to any preceding claim,
**characterized in that,**
the storage racks (4) within the warehouse (2) are separated from each other by corridors (2a, 2b, 2c) suitable for driving the industrial trucks (1) through the corridors (2a, 2b, 2c) and each storage rack (4) comprises at least one second guiding means (42) connected to the warehouse computer system (6) and arranged at the beginning of each corridor (2a, 2b, 2c), where the second guiding means (42) comprises a second identification sensor (421) to identify the industrial trucks (1) approaching the storage racks (4) from the loading dock (5) via the corresponding identification tags (11), and a second guiding display (422) to guide (G) the identified truck (1) into the right corridor (2a) according to the assigned delivery order suitable to collect the objects (3) of the assigned delivery order.

4. The warehouse guiding system according to claim 3,
**characterized in that,**
the second guiding display (422) displays the characteristic identification code provided by the identification tag (11) of the identified truck (1) in order to guide the industrial truck (1) into the right corridor (2a).

5. The warehouse guiding system according to any preceding claim,
**characterized in that,**
the industrial truck (1) comprises an order display (12) connected to the warehouse computer system (6) displaying the delivery orders assigned to the industrial truck (1) provided by the warehouse computer system (6).

6. The warehouse guiding system according to claim 5,
**characterized in that,**
the assigned delivery order comprises one or more objects (3) to be collected as listed in a sequence and that the warehouse computer system (6) is arranged to provide the list of objects (3) in the sequence enabling the industrial truck (1) to collect the objects (3) via the shortest distance to be driven when executing the assigned delivery order along the listed sequence.

7. The warehouse guiding system according to claim 4 to 6,
**characterized in that,**
the industrial truck (1) comprises a barcode reader (13) connected to the order display (12) suitably arranged to read-out a barcode label (31) attached to a front side (3a) of the object (3) facing towards the collecting industrial truck (1) when removing the object (3) from the storage rack (4).

8. The warehouse guiding system according to claim 7,
**characterized in that**, -
the assigned delivery order comprises the barcodes attached to the objects (3) and the order display (12) comprises comparing means to compare the read-out barcode (31) of the object (3) to the barcode present in the order display and is arranged to provide a warning message in case of the read-out barcode (31) deviates from the barcode in the assigned delivery order or in case of no barcode (31) is read-out.

9. The warehouse guiding system according to claim 8,
**characterized in that,**
the order display (12) comprises a confirmation button suitable to quit the warning message to indicate to the warehouse computer system (6), that the removed object (3) is the intended object (3) listed in the delivery order.

10. A method to operate a warehouse guiding system for industrial trucks (1) as claimed in claim 1 supporting fast delivery of objects (3) from a storage rack (4) arranged in a warehouse (2) to at least one loading dock (5) by the industrial trucks (11), where a wireless machine-readable identification tag (11) is arranged at each industrial truck (1) providing (PI) a characteristic identification code for the corresponding industrial truck (1) comprising the steps of:
- storing multiple objects (3) in at least one storage rack (4);
- arranging at least one first guiding means (41) comprising a first identification sensor (411) and a first guiding display (412) and a storage unit (413) at each storage sector (4a, 4b, 4c, 4d) of the storage rack (4);
- providing (PO) delivery orders to the industrial trucks (1) and assigning (AS) particular delivery orders to particular trucks (1) to collect the objects (3) specified in the delivery orders from the corresponding storage rack (4) by a warehouse computer system (6);
- controlling (CT) at least multiple first guiding means (41) connected to the warehouse computer system (6) in accordance to the assigned (AS) delivery orders by the warehouse computer system (6);
- identifying (I) the industrial trucks being in proximity of the first guiding means (41) via the corresponding identification tags (11) via the first identification sensor (411) of the first guiding means (41) and via the identification codes of the trucks stored locally in the storage (413) of the first guiding means.
- lighting-up (LU) the first guiding display (412) of the first guiding means (41) of the particular storage sector (4b) storing the particular object (3) specified in the particular delivery order, when the identified industrial truck (1) approaching (AP) this particular storage section (4b) corresponds to the industrial truck (1) assigned (AS) to the particular delivery order; and
- collecting the object specified in the assigned (AS) delivery order from the particular storage sector (4b) with lighted-up (LU) first guiding display (412) by the industrial truck positioned (POS) in front of the particular storage sector (4b).

11. The method according to claim 10,
**characterized in that,**
the method further comprises the step of displaying (D) the characteristic identification code provided by the identification tag (11) of the identified truck (1), preferably also the storage level (L1, L2, L3, L4) of the storage rack (4) where the particular object (3) is stored.

12. The method according to claim 10 or 11,
**characterized in that,**
the method further comprises the following steps of
- approaching (AP) an arrangement of storage racks (4) from the loading dock (5) where the storage racks (4) are separated from each other by corridors (2a, 2b, 2c) suitable for driving the industrial trucks (1) through the corridors (2a, 2b, 2c) and each storage rack (4) comprises at least one second guiding means (42) connected to the warehouse computer system (6) and arranged at the beginning of each corridor (2a, 2b, 2c),
- identifying (I) the industrial trucks (11) approaching the storage racks (4) from the loading dock (5) via the corresponding identification tags (11) with a second identification sensor (421) of the second guiding means (42); and
- guiding (G) the identified truck (1) into the right corridor (2a) suitable to collect the objects (3) of the delivery order assigned (AS) to the identified truck (1) by displaying the characteristic identification code provided (PI) by the identification tag (11) of the identified truck (1).

13. The method according to any of claims 10 to 12,
**characterized in that,**
the method further comprises the step of displaying (D) the delivery orders assigned (AS) to the industrial truck (1) provided by the warehouse computer system (6) with an order display (12) arranged in the industrial trucks (1) and connected to the warehouse computer system (6), preferably to collect objects (3) are listed in a sequence enabling the industrial truck (1) to collect the objects (3) via the shortest distance to be driven when executing the assigned (AS) delivery order along the listed sequence.

14. The method according to any of claims 10 to 13,
**characterized in that,**
the method further comprises the step of reading-out (RO) a barcode label (31) attached to a front side (3a) of the object (3) facing towards the collecting industrial truck (1) when removing the object (3) from the storage rack (4) by a barcode reader (13) suitable arranged in the industrial truck (1) and connected to the order display (12); preferably the order display (12) further compares the read-out barcode (31) of the object (3) with the barcode present in the delivery order with comparing means and provides a warning message in case of the read-out barcode (31) deviates from the barcode in the assigned (AS) delivery order or in case of no barcode (31) is read-out; more preferably notifying (N) the warehouse computer system (6) about the removed object (3) after read-out (RO) of the barcode (31).

## Patentansprüche

1. Warenlagerführungssystem, das in einem Warenlager (2) angeordnet ist, das mehrere Objekte (3) umfasst, die in wenigstens einem Lagerregal (4) gelagert sind, um die schnelle Lieferung von Objekten (3) von wenigstens einem der Lagerregale (4) zu wenigstens einer Laderampe (5) des Warenlagers (2) durch Flurförderfahrzeuge (1) zu unterstützen,
wobei das System umfasst:
- Flurförderfahrzeuge (1),
- wenigstens mehrere erste Führungsmittel (41),
- ein Warenlagercomputersystem (6), das Auslieferungsanweisungen an die Flurförderfahrzeuge (1) bereitstellt und bestimmte Auslieferungsanweisungen bestimmten Förderfahrzeugen (1) zuweist, um die in den Auslieferungsanweisungen spezifizierten Objekte (3) von dem entsprechenden Lagerregal (4) zu sammeln und um wenigstens die mehreren ersten Führungsmittel (41) in Übereinstimmung mit den zugewiesenen Auslieferungsanweisungen zu steuern, wobei die Flurförderfahrzeuge (1) eine drahtlose maschinenlesbare Identifizierungsmarke (11) umfassen, die einen charakteristischen Identifizierungscode für das entsprechende Flurförderfahrzeug (1) bereitstellt, wobei
das Lagerregal (4) die mit dem Warenlagercomputersystem (6) verbundenen ersten Führungsmittel (41), wobei wenigstens ein erstes Führungsmittel (41) bei jedem Lagersektor (4a, 4b, 4c, 4d) des Lagerregals (4) angeordnet ist, und eine erste Führungsanzeige (412) umfasst, wobei das erste Führungsmittel (41) bei dem bestimmten Lagersektor (4b), der das in der bestimmten Auslieferungsanweisung spezifizierte bestimmte Objekt (3) lagert, so ausgelegt ist, dass es die erste Führungsanzeige (412) aufleuchten lässt,
**dadurch gekennzeichnet, dass**
das erste Führungsmittel (41) eine Speichereinheit (413) umfasst, wo die Identifizierungscodes der Flurförderfahrzeuge (1) gespeichert sind, und die ersten Führungsmittel (41) jeweils einen ersten Identifizierungssensor (411) zum Identifizieren der Flurförderfahrzeuge (1), die in der Nähe des ersten Führungsmittels sind, über die entsprechende Identifizierungsmarke (11) umfassen und das erste Führungsmittel (41) dafür ausgelegt ist, die erste Führungsanzeige (412) aufleuchten zu lassen, wenn das identifizierte Flurförderfahrzeug (1), das sich diesem bestimmten Lagerabschnitt (4b) nähert, dem Flurförderfahrzeug (1) entspricht, dem die bestimmte Auslieferungsanweisung, die das bestimmte Objekt (3) umfasst, zugewiesen ist.

2. Warenlagerführungssystem nach Anspruch 1,
**dadurch gekennzeichnet, dass**
die erste aufleuchtende Führungsanzeige (412) außerdem den durch die Identifizierungsmarke (11) des identifizierten Förderfahrzeugs (1) bereitgestellten charakteristischen Identifizierungscode, vorzugsweise ebenfalls die Lagerebene (L1, L2, L3, L4) des Lagerregals (4), wo das bestimmte Objekt (3) gelagert ist, anzeigt.

3. Warenlagerführungssystem nach einem vorhergehenden Anspruch,
**dadurch gekennzeichnet, dass**
die Lagerregale (4) innerhalb des Warenlagers (2) durch Korridore (2a, 2b, 2c), die geeignet dafür sind, dass die Flurförderfahrzeuge (1) durch die Korridore (2a, 2b, 2c) fahren, voneinander getrennt sind und jedes Lagerregal (4) wenigstens ein zweites Führungsmittel (42) umfasst, das mit dem Warenlagercomputersystem (6) verbunden ist und am Anfang jedes Korridors (2a, 2b, 2c) angeordnet ist, wobei das zweite Führungsmittel (42) einen zweiten Identifizierungssensor (421) zum Identifizieren der Flurförderfahrzeuge (1), die sich den Lagerregalen (4) von der Laderampe (5) nähern, über die entsprechenden Identifizierungsmarken (11), und eine zweite Führungsanzeige (422) zum Führen (G) des identifizierten Förderfahrzeugs (1) in Übereinstimmung mit der zugewiesenen Auslieferungsanweisung in den richtigen Korridor (2a), der dafür geeignet ist, die Objekte (3) der zugewiesenen Auslieferungsanweisung zu sammeln, umfasst.

4. Warenlagerführungssystem nach Anspruch 3,
**dadurch gekennzeichnet, dass**
die zweite Führungsanzeige (422) den charakteristischen Identifizierungscode anzeigt, der durch die Identifizierungsmarke (11) des identifizierten Förderfahrzeugs (1) bereitgestellt wird, um das Flurförderfahrzeug (1) in den richtigen Korridor (2a) zu führen.

5. Warenlagerführungssystem nach einem vorhergehenden Anspruch,
**dadurch gekennzeichnet, dass**
das Flurförderfahrzeug (1) eine mit dem Warenlagercomputersystem (6) verbundene Anweisungsanzeige (12) umfasst, die die durch das Warenlagercomputersystem (6) bereitgestellten dem Flurförderfahrzeug (1) zugewiesenen Auslieferungsanweisungen anzeigt.

6. Warenlagerführungssystem nach Anspruch 5,
**dadurch gekennzeichnet, dass**
die zugewiesene Auslieferungsanweisung ein oder mehrere Objekte (3) umfasst, die so, wie sie in einer Abfolge aufgeführt sind, zu sammeln sind, und das Warenlagercomputersystem (6) so ausgelegt ist, dass es die Liste von Objekten (3) in der Abfolge bereitstellt, die ermöglicht, dass das Flurförderfahrzeug (1) die Objekte (3) über die kürzeste zu fahrende Entfernung sammelt, wenn es die zugewiesene Auslieferungsanweisung entlang der aufgeführten Abfolge ausführt.

7. Warenlagerführungssystem nach Anspruch 4 bis 6,
**dadurch gekennzeichnet, dass**
das Flurförderfahrzeug (1) einen mit der Anweisungsanzeige (12) verbundenen Strichcodeleser (13) umfasst, der zum Auslesen eines an einer Vorderseite (3a) des Objekts (3) befestigten Strichcodeetiketts (31) geeignet angeordnet ist, wobei die Vorderseite (3a) in Richtung des sammelnden Flurförderfahrzeugs (1) weist, wenn das Objekt (3) aus dem Lagerregal (4) entnommen wird.

8. Warenlagerführungssystem nach Anspruch 7,
**dadurch gekennzeichnet, dass**
die zugewiesene Auslieferungsanweisung die an den Objekten (3) befestigten Strichcodes umfasst und die Anweisungsanzeige (12) Vergleichsmittel zum Vergleichen des ausgelesenen Strichcodes (31) des Objekts (3) mit dem in der Anweisungsanzeige vorhandenen Strichcode umfasst und zum Bereitstellen einer Warnmeldung ausgelegt ist, falls der ausgelesene Strichcode (31) von dem Strichcode in der zugewiesenen Auslieferungsanweisung abweicht oder falls kein Strichcode (31) ausgelesen wird.

9. Warenlagerführungssystem nach Anspruch 8,
**dadurch gekennzeichnet, dass**
die Anweisungsanzeige (12) eine Bestätigungsschaltfläche umfasst, die dafür geeignet ist, die Warnmeldung zu beenden, um für das Warenlagercomputersystem (6) anzugeben, dass das entnommene Objekt (3) das in der Auslieferungsanweisung aufgeführte beabsichtigte Objekt (3) ist.

10. Verfahren zum Betreiben eines Warenlagerführungssystems für Flurförderfahrzeuge (1) nach Anspruch 1, das die schnelle Lieferung von Objekten (3) von einem in einem Warenlager (2) angeordneten Lagerregal (4) zu wenigstens einer Laderampe (5) durch die Flurförderfahrzeuge (1) unterstützt, wobei bei jedem Flurförderfahrzeug (1) eine drahtlose maschinenlesbare Identifizierungsmarke (11) angeordnet ist, die einen charakteristischen Identifizierungscode für das entsprechende Flurförderfahrzeug (1) bereitstellt (PI), wobei das Verfahren die folgenden Schritte umfasst:
- Lagern mehrerer Objekte (3) in wenigstens einem Lagerregal (4),
- Anordnen wenigstens eines ersten Führungsmittels (41), das einen ersten Identifizierungssensor (411) umfasst, und einer ersten Führungsanzeige (412) und einer Speichereinheit (413) bei jedem Lagersektor (4a, 4b, 4c, 4d) des Lagerregals (4);
- Bereitstellen (PO) von Auslieferungsanweisungen an die Flurförderfahrzeuge (1) und Zuweisen (AS) bestimmter Auslieferungsanweisungen zu bestimmten Förderfahrzeugen (1), um die in den Auslieferungsanweisungen spezifizierten Objekte (3) von dem entsprechenden Lagerregal (4) zu sammeln, durch ein Warenlagercomputersystem (6);
- Steuern (CT) wenigstens mehrerer erster Führungsmittel (41), die mit dem Warenlagercomputersystem (6) verbunden sind, in Übereinstimmung mit den zugewiesenen (AS) Auslieferungsanweisungen durch das Warenlagercomputersystem (6);
- Identifizieren (I) der Flurförderfahrzeuge, die sich in der Nähe des ersten Führungsmittels (41) befinden, über die entsprechenden Identifizierungsmarken (11) über den ersten Identifizierungssensor (411) des ersten Führungsmittels (41) und über die Identifizierungscodes der Förderfahrzeuge, die lokal in dem Speicher (413) des ersten Führungsmittels gespeichert sind,
- Aufleuchten lassen (LU) der ersten Führungsanzeige (412) des ersten Führungsmittels (41) des bestimmten Lagersektors (4b), der das in der bestimmten Auslieferungsanweisung spezifizierte bestimmte Objekt (3) lagert, wenn das identifizierte Flurförderfahrzeug (1), das sich diesem bestimmten Lagerabschnitt (4b) nähert (AP), dem Flurförderfahrzeug (1) entspricht, dem die bestimmte Auslieferungsanweisung zugewiesen (AS) ist; und
- Sammeln des in der zugewiesenen (AS) Auslieferungsanweisung spezifizierten Objekts von dem bestimmten Lagersektor (4b) mit aufleuchtender (LU) erster Führungsanzeige (412) durch das vor dem bestimmten Lagersektor (4b) positionierte (POS) Flurförderfahrzeug.

11. Verfahren nach Anspruch 10,
**dadurch gekennzeichnet, dass**
das Verfahren ferner den Schritt des Anzeigens (D) des durch die Identifizierungsmarke (11) des identifizierten Förderfahrzeugs (1) bereitgestellten charakteristischen Identifizierungscodes, vorzugsweise ebenfalls der Lagerebene (L1, L2, L3, L4) des Lagerregals (4), wo das bestimmte Objekt (3) gelagert ist, umfasst.

12. Verfahren nach Anspruch 10 oder 11,
**dadurch gekennzeichnet, dass**
das Verfahren ferner die folgenden Schritte umfasst:
- Nähern (AP) einer Anordnung von Lagerregalen (4) von der Laderampe (5), wobei die Lagerregale (4) durch Korridore (2a, 2b, 2c), die dafür geeignet sind, dass die Flurförderfahrzeuge (1) durch die Korridore (2a, 2b, 2c) fahren, voneinander getrennt sind und wobei jedes Lagerregal (4) wenigstens ein zweites Führungsmittel (42) umfasst, das mit dem Warenlagercomputersystem (6) verbunden ist und am Anfang jedes Korridors (2a, 2b, 2c) angeordnet ist,
- Identifizieren (I) der Flurförderfahrzeuge (1), die sich den Lagerregalen (4) von der Laderampe (5) nähern, über die entsprechenden Identifizierungsmarken (11) mit einem zweiten Identifizierungssensor (421) des zweiten Führungsmittels (42); und
- Führen (G) des identifizierten Förderfahrzeugs (1) in den richtigen Korridor (2a), der geeignet ist, die Objekte (3) der dem identifizierten Förderfahrzeug (1) zugewiesenen (AS) Auslieferungsanweisung zu sammeln, durch Anzeigen des charakteristischen Identifizierungscodes, der durch die Identifizierungsmarke (11) des identifizierten Förderfahrzeugs (1) bereitgestellt (PI) wird.

13. Verfahren nach einem der Ansprüche 10 bis 12,
**dadurch gekennzeichnet, dass**
das Verfahren ferner den Schritt des Anzeigens (D) der durch das Warenlagercomputersystem (6) bereitgestellten dem Flurförderfahrzeug (1) zugewiesenen (AS) Lieferabfolgen mit einer Anweisungsanzeige (12), die in den Flurförderfahrzeugen (1) angeordnet ist und die mit dem Warenlagercomputersystem (6) verbunden ist, umfasst, vorzugsweise, um Objekte (3) zu sammeln, die in der Abfolge aufgeführt sind, die ermöglicht, dass das Flurförderfahrzeug (1) die Objekte (3) über die kürzeste Entfernung sammelt, die zu fahren ist, wenn die zugewiesene (AS) Lieferabfolge entlang der aufgeführten Folge ausgeführt wird.

14. Verfahren nach einem der Ansprüche 10 bis 13,
**dadurch gekennzeichnet, dass**
das Verfahren ferner den Schritt des Auslesens (RO) eines Strichcodeetiketts (31) durch einen Strichcodeleser (13), der in dem Flurförderfahrzeug (1) geeignet angeordnet ist und mit der Anweisungsanzeige (12) verbunden ist, umfasst, wobei das Strichcodeetikett (31) an einer Vorderseite (3a) des Objekts (3) angebracht ist, die in Richtung des sammelnden Flurförderfahrzeugs (1) weist, wenn das Objekt (3) aus dem Lagerregal (4) entnommen wird; wobei die Anweisungsanzeige (12) vorzugsweise ferner den ausgelesenen Strichcode (31) des Objekts (3) mit dem in der Auslieferungsanweisung vorhandenen Strichcode mit Vergleichsmitteln vergleicht und eine Warnmeldung bereitstellt, falls der ausgelesene Strichcode (31) von dem Strichcode in der zugewiesenen (AS) Lieferabfolge abweicht oder falls kein Strichcode (31) ausgelesen wird; besonders bevorzugt wird nach Auslesen (RO) des Strichcodes (31) das Warenlagercomputersystem (6) über das entnommene Objekt (3) benachrichtigt (N) .

## Revendications

1. Système de guidage d'entrepôt agencé dans un entrepôt (2) comprenant de multiples objets (3) stockés dans au moins un rayonnage de stockage (4) afin de supporter la livraison rapide d'objets (3) d'au moins un des rayonnages de stockage (4) à au moins un quai de chargement (5) de l'entrepôt (2) par des chariots de manutention (1),
le système comprenant :
- des chariots de manutention (1),
- au moins de multiples premiers moyens de guidage (41),
- un système informatique d'entrepôt (6) fournissant des ordres de livraison aux chariots de manutention (1) et attribuant des ordres de livraison particuliers à des chariots particuliers (1) pour recueillir les objets (3) spécifiés dans les ordres de livraison du rayonnage de stockage correspondant (4) et pour commander au moins les multiples premiers moyens de guidage (41) conformément aux ordres de livraison attribués, dans lequel
les chariots de manutention (1) comprennent une étiquette d'identification lisible par un moyen sans fil par machine (11) fournissant un code d'identification caractéristique pour le chariot de manutention correspondant (1), dans lequel
le rayonnage de stockage (4) comprend les premiers moyens de guidage (41) connectés au système informatique d'entrepôt (6) avec au moins un premier moyen de guidage (41) agencé au niveau de chaque secteur de stockage (4a, 4b, 4c, 4d) du rayonnage de stockage (4), et un premier affichage de guidage (412), dans lequel le premier moyen de guidage (41) au niveau du secteur de stockage particulier (4b) stockant l'objet particulier (3) spécifié dans l'ordre de livraison particulier est agencé pour éclairer le premier affichage de guidage (412),
**caractérisé en ce que**
le premier moyen de guidage (41) comprend un module de stockage (413) où les codes d'identification des chariots de manutention (1) sont stockés, et
les premiers moyens de guidage (41) comprennent chacun un premier capteur d'identification (411) pour identifier les chariots de manutention (1) qui sont à proximité des premiers moyens de guidage par le biais des étiquettes d'identification correspondantes (11) et le premier moyen de guidage (41) est agencé pour éclairer le premier affichage de guidage (412) lorsque le chariot de manutention identifié (1) approchant cette section de stockage particulière (4b) correspond au chariot de manutention (1) attribué à l'ordre de livraison particulier comprenant l'objet particulier (3).

2. Système de guidage d'entrepôt selon la revendication 1,
**caractérisé en ce que**
le premier affichage de guidage éclairé (412) affiche également le code d'identification caractéristique fourni par l'étiquette d'identification (11) du chariot identifié (1), de préférence également le niveau de stockage (L1, L2, L3, L4) du rayonnage de stockage (4) où l'objet particulier (3) est stocké.

3. Système de guidage d'entrepôt selon l'une quelconque des revendications précédentes,
**caractérisé en ce que**
les rayonnages de stockage (4) au sein de l'entrepôt (2) sont séparés les uns des autres par des couloirs (2a, 2b, 2c) convenant à conduire les chariots de manutention (1) à travers les couloirs (2a, 2b, 2c) et chaque rayonnage de stockage (4) comprend au moins un second moyen de guidage (42) connecté au système informatique d'entrepôt (6) et agencé au début de chaque couloir (2a, 2b, 2c), où le second moyen de guidage (42) comprend un second capteur d'identification (421) pour identifier les chariots de manutention (1) approchant les rayonnages de stockage (4) depuis le quai de chargement (5) par le biais des étiquettes d'identification correspondantes (11), et un second affichage de guidage (422) pour guider (G) le chariot identifié (1) dans le bon couloir (2a) en fonction de l'ordre de livraison attribué convenant à recueillir les objets (3) de l'ordre de livraison attribué.

4. Système de guidage d'entrepôt selon la revendication 3,
**caractérisé en ce que**
le second affichage de guidage (422) affiche le code d'identification caractéristique fourni par l'étiquette d'identification (11) du chariot identifié (1) afin de guider le chariot de manutention (1) dans le bon couloir (2a).

5. Système de guidage d'entrepôt selon l'une quelconque des revendications précédentes,
**caractérisé en ce que**
le chariot de manutention (1) comprend un affichage d'ordre (12) connecté au système informatique d'entrepôt (6) affichant les ordres de livraison attribués au chariot de manutention (1) fournis par le système informatique d'entrepôt (6).

6. Système de guidage d'entrepôt selon la revendication 5,
**caractérisé en ce que**
l'ordre de livraison attribué comprend un ou plusieurs objets (3) devant être recueillis tels qu'énumérés dans une séquence et que le système informatique d'entrepôt (6) est agencé pour fournir la liste d'objets (3) dans la séquence permettant au chariot de manutention (1) de recueillir les objets (3) par le biais de la distance la plus courte devant être parcourue lors de l'exécution de l'ordre de livraison attribué le long de la séquence énumérée.

7. Système de guidage d'entrepôt selon les revendications 4 à 6,
**caractérisé en ce que**
le chariot de manutention (1) comprend un lecteur de code-barres (13) connecté à l'affichage d'ordre (12) agencé de manière appropriée pour lire une étiquette de code-barres (31) reliée à un côté avant (3a) de l'objet (3) tourné vers le chariot de manutention receuillant(1) lors du retrait de l'objet (3) du rayonnage de stockage (4).

8. Système de guidage d'entrepôt selon la revendication 7,
**caractérisé en ce que**
l'ordre de livraison attribué comprend les code-barres reliés aux objets (3), et l'affichage d'ordre (12) comprend un moyen de comparaison pour comparer le code-barres lu (31) de l'objet (3) au code-barres présent dans l'affichage d'ordre et est agencé pour fournir un message d'avertissement au cas où le code-barres lu (31) diffère du code-barres dans l'ordre de livraison attribué ou au cas où aucun code-barres (31) n'est lu.

9. Système de guidage d'entrepôt selon la revendication 8,
**caractérisé en ce que**
l'affichage d'ordre (12) comprend un bouton de confirmation convenant à quitter le message d'avertissement pour indiquer au système informatique d'entrepôt (6) que l'objet retiré (3) est l'objet envisagé (3) énuméré dans l'ordre de livraison.

10. Procédé pour opérer un système de guidage d'entrepôt pour chariots de manutention (1) selon la revendication 1 supportant la livraison rapide d'objets (3) d'un rayonnage de stockage (4) agencé dans un entrepôt (2) à au moins un quai de chargement (5) par les chariots de manutention (1), où une étiquette d'identification lisible par un moyen sans fil par machine (11) est agencée au niveau de chaque chariot de manutention (1) fournissant (PI) un code d'identification caractéristique pour le chariot de manutention correspondant (1), comprenant les étapes consistant à :
- stocker de multiples objets (3) dans au moins un rayonnage de stockage (4) ;
- agencer au moins un premier moyen de guidage (41) comprenant un premier capteur d'identification (411) et un premier affichage de guidage (412) et un module de stockage (413) au niveau de chaque secteur de stockage (4a, 4b, 4c, 4d) du rayonnage de stockage (4) ;
- fournir (PO) des ordres de livraison aux chariots de manutention (1) et attribuer (AS) des ordres de livraison particuliers à des chariots particuliers (1) pour recueillir les objets (3) spécifiés dans les ordres de livraison du rayonnage de stockage correspondant (4) par un système informatique d'entrepôt (6) ;
- commander (CT) au moins de multiples premiers moyens de guidage (41) connectés au système informatique d'entrepôt (6) conformément aux ordres de livraison attribués (AS) par le système informatique d'entrepôt (6) ;
- identifier (I) les chariots de manutention qui sont à proximité des premiers moyens de guidage (41) par le biais des étiquettes d'identification correspondantes (11) par le biais du premier capteur d'identification (411) des premiers moyens de guidage (41) et par le biais des codes d'identification des chariots stockés localement dans le stockage (413) des premiers moyens de guidage ;
- éclairer (LU) le premier affichage de guidage (412) du premier moyen de guidage (41) du secteur de stockage particulier (4b) stockant l'objet particulier (3) spécifié dans l'ordre de livraison particulier lorsque le chariot de manutention identifié (1) approchant (AP) cette section de stockage particulière (4b) correspond au chariot de manutention (1) attribué (AS) à l'ordre de livraison particulier ; et
- recueillir l'objet spécifié dans l'ordre de livraison attribué (AS) du secteur de stockage particulier (4b) avec le premier affichage de guidage (412) éclairé (LU) par le chariot de manutention positionné (POS) devant le secteur de stockage particulier (4b).

11. Procédé selon la revendication 10,
**caractérisé en ce que**
le procédé comprend en outre l'étape consistant à afficher (D) le code d'identification caractéristique fourni par l'étiquette d'identification (11) du chariot identifié (1), de préférence également le niveau de stockage (L1, L2, L3, L4) du rayonnage de stockage (4) où l'objet particulier (3) est stocké.

12. Procédé selon la revendication 10 ou 11,
**caractérisé en ce que**
le procédé comprend en outre les étapes suivantes consistant à
- approcher (AP) un agencement de rayonnages de stockage (4) du quai de chargement (5) où les rayonnages de stockage (4) sont séparés les uns des autres par des couloirs (2a, 2b, 2c) convenant à conduire les chariots de manutention (1) à travers les couloirs (2a, 2b, 2c) et chaque rayonnage de stockage (4) comprend au moins un second moyen de guidage (42) connecté au système informatique d'entrepôt (6) et agencé au début de chaque couloir (2a, 2b, 2c),
- identifier (I) les chariots de manutention (1) approchant les rayonnages de stockage (4) depuis le quai de chargement (5) par le biais des étiquettes d'identification correspondantes (11) avec un second capteur d'identification (421) du second moyen de guidage (42) ; et
- guider (G) le chariot identifié (1) dans le bon couloir (2a) convenant à recueillir les objets (3) de l'ordre de livraison attribué (AS) au chariot identifié (1) en affichant le code d'identification caractéristique fourni (PI) par l'étiquette d'identification (11) du chariot identifié (1).

13. Procédé selon l'une quelconque des revendications 10 à 12,
**caractérisé en ce que**
le procédé comprend en outre l'étape consistant à afficher (D) les ordres de livraison attribués (AS) au chariot de manutention (1) fournis par le système informatique d'entrepôt (6) avec un affichage d'ordre (12) agencé dans les chariots de manutention (1) et connecté au système informatique d'entrepôt (6), de préférence pour recueillir des objets (3) qui sont énumérés dans une séquence permettant au chariot de manutention (1) de recueillir les objets (3) par le biais de la distance la plus courte devant être parcourue lors de l'exécution de l'ordre de livraison attribué (AS) le long de la séquence énumérée.

14. Procédé selon l'une quelconque des revendications 10 à 13,
**caractérisé en ce que**
le procédé comprend en outre l'étape consistant à lire (RO) une étiquette de code-barres (31) reliée à un côté avant (3a) de l'objet (3) tourné vers le chariot de manutention de recueil (1) lors du retrait de l'objet (3) du rayonnage de stockage (4) par un lecteur de code-barres (13) agencé de manière appropriée dans le chariot de manutention (1) et connecté à l'affichage d'ordre (12) ; l'affichage d'ordre (12) compare en outre de préférence le code-barres lu (31) de l'objet (3) au code-barres présent dans l'ordre de livraison avec un moyen de comparaison et fournit un message d'avertissement au cas où le code-barres lu (31) dévie du code-barres dans l'ordre de livraison attribué (AS) ou au cas où aucun code-barres (31) n'est lu ; notifiant (N) plus préférablement le système informatique d'entrepôt (6) de l'objet retiré (3) après la lecture (RO) du code-barres (31).
